# EUROPÄISCHE PATENTSCHRIFT

(11) **EP 0 950 599 B1**
(45) Veröffentlichungstag und Bekanntmachung des Hinweises auf die Patenterteilung: **03.09.2003**
(21) Anmeldenummer: 98107053.5
(22) Anmeldetag: 17.04.1998
(51) Int. Cl.: B62B 3/00

(54) **Transportvorrichtung**
Transport device
Dispositif de transport

(43) Veröffentlichungstag der Anmeldung: 20.10.1999
(73) Patentinhaber: GEBHARDT Transport- und Lagersysteme GmbH, 93413 Cham (DE)
(72) Erfinder: Kappenberger,Karl., 93466 Chamerau. (DE)
(74) Vertreter: Baronetzky, Klaus, Dipl.-Ing.

(56) Entgegenhaltungen:
- EP-A- 0 487 147
- DE-A- 19 527 747

## Beschreibung

Die Erfindung betrifft eine Transportvorrichtung, gemäß dem Oberbegriff von Anspruch 1.

Derartige Transportvorrichtungen sind als Rollboxen seit langem bekannt. Sie bestehen in der Regel aus einer Bodenplatte aus Kunststoff, Holz oder Metall. An zwei einander gegenüberliegenden Seitenkanten lagert die Bodenplatte zwei Seitenwände, die als Gitterroste ausgebildet sind. Die Gitterroste bestehen aus einem gebogenen Oberrohr, das sich über die Ober- und die Seitenkanten der Seitenwand erstreckt, sowie aus einem Unterrohr, das zwischen die Enden des Oberrohrs eingeschweißt ist, sowie aus mehreren, beispielsweise vier senkrechten Verstrebungsrohren, die über beispielsweise drei oder vier waagerechte Flacheisen ein Gitter bilden.

Derartige Rollboxen werden in großem Umfang eingesetzt.

Aus dem Prospekt "Rollboxen 1910 ISB" der Firma Ludwig Gebhardt GmbH & Co. Betriebs-KG ist es bekannt geworden, die Transportvorrichtung mit einer Kennzeichnung zu versehen, die ein oder mehrere Anzeigefelder umfassen kann. Die Kennzeichnung dient im Beispielsfalle der Identifikation der Rollbox, um eine einfache Zuordnung des Eigentümers beispielsweise bei Verladung der Rollbox zu gewährleisten.

Ferner ist es bereits vorgeschlagen worden, die Transportvorrichtungen mit automatisch lesbaren Anzeigefeldern zu versehen, die im Bereich der Seitenwand oder unten seitlich an der Bodenplatte angebracht sein können. Die Anbringung an einer Seitenwand kann im Grunde nur dann der eindeutigen Identifikation dienen, wenn die Seitenwand im Gebrauch nicht abgenommen wird, was jedoch - beispielsweise zur Stapelung der Rollbox - häufig geschieht.

Ferner sind die der Identifikation dienenden Anzeigefelder im Grunde nicht geeignet, die auf den Rollboxen oder Transportvorrichtungen aufgenommenen Waren zu kennzeichnen. Dies wäre jedoch zur Verbesserung der logistischen Abläufe sehr wünschenswert.

Daher liegt der Erfindung die Aufgabe zugrunde, eine Transportvorrichtung gemäß dem Oberbegriff von Anspruch 1 zu schaffen, die hinsichtlich der logistischen Handhabung verbessert ist und insbesondere auch für die automatische Logistiksteuerung geeignet ist.

Diese Aufgabe wird erfindungsgemäß durch Anspruch 1 gelöst. Vorteilhafte Weiterbildungen ergeben sich aus den Unteransprüchen.

Überraschend ermöglicht die erfindungsgemäß schräg nach oben weisende Barcodefläche eine zuverlässige Logisitiksteuerung mit automatischer Erkennung der Nutzwaren und/oder der Rollboxidentifikation: die schräg nach oben weisende Barcodefläche, die an der Bodenplatte angebracht ist, kann durch ein entsprechendes, an sich bekanntes optisches Lesegerät, das etwa in 1 m Höhe gehalten oder gelagert ist und dessen Lesestrahl schräg nach unten weist, zuverlässig erkannt werden, wobei auch Abstandsschwankungen zwischen dem Lesegerät und der Bahn der Rollbox die Lesegenauigkeit und -sicherheit nicht beeinträchtigen können, sofern die Barcodefläche im Bereich des Lesewinkels bleibt.

Nachdem zusätzlich meist der Barcode in Form von Ziffern auf den Barcodeetiketten wiedergegeben ist, kann bei Bedarf auch eine optische Kontrolle durch eine Bedienperson vorgenommen werden.

Durch die schräg nach oben weisende Anordnung ist die Barcodefläche gut geschützt, aber dennoch besonders gut erkennbar, wobei die Schutzfunktion des Unterrohrs ausgenützt wird, das die Barcodefläche praktisch vor herabfallenden Gegenständen schützt.

Bevorzugt erstreckt sich die Barcodefläche entlang der dort schrägen Oberkante der Bodenplatte. Die einzelnen Striche des Barcodes verlaufen damit quer zur Oberkante, so daß die Erkennbarkeit abstandsunabhängig ist.

Bei Versuchen mit einem fest installierten Lesegerät ergab sich, daß es möglich ist, die Rollboxen entlang einer Bahn in der in der Ladetechnik üblichen Art anzustoßen und frei laufen zu lassen, ohne daß die Erkennungssicherheit beeinträchtigt worden wäre, auch wenn der horizontale Abstand von der Position des Lesegeräts zwischen 50 cm und 2 m betrug. Eine derartige Erkennungssicherheit war nur mit der erfindungsgemäß schräg angeordneten Barcodefläche möglich.

In vorteilhafter Ausgestaltung der Erfindung ist es vorgesehen, an beiden Seitenwänden zwei entweder symmetrisch oder diagonal einander gegenüberliegende Barcodeflächen vorzusehen. Bei dieser Ausgestaltung ist es möglich, mit einem Lesegerät auszukommen, das die Erkennbarkeit dann stets gewährleistet. Gemäß einer vorteilhaften Weiterbildung ist es vorgesehen, die Barcodeetiketten auch automatisch aufzubringen, sobald die Beladung der Transportvorrichtung mit den Waren im Herstellwerk vorgenommen ist. Hierzu wird kurzerhand ein weiteres Etikett auf die Barcodefläche über an sich bekannte Etiketten-Klebevorrichtungen aufgeklebt bzw. angerollt. Nachdem die Oberfläche der Barcodefläche bevorzugt hochglatt ist, können die aufgeklebten Etiketten bei Bedarf, also beispielsweise wenn sich 20 Etiketten angesammelt haben, insgesamt leicht abgezogen und entsorgt werden.

Wenn die Barcodefläche der eindeutigen Identifikation der Palette dienen soll, ist es bevorzugt, die Oberfläche der Barcodefläche rauh zu gestalten, so daß ein zerstörungsfreies Ablösen der Barcodeetiketten nicht möglich ist.

Es ist besonders bevorzugt, wenn die Barcodeflächen auch seitlich besonders geschützt angebracht sind. Hierzu ist es vorgesehen, die Barcodeflächen in dem Bereich zwischen den Lagernuten für die Unterrohre und den Halteklammern für die Unterrohre auszubilden, wobei der dortige Bereich ohnehin regelmäßig keine Stützfunktion für das Unterrohr aufwies, das sich vielmehr frei über den Bereich erstreckte.

Der Überlappungsbereich des Unterrohrs gegenüber der Barcodefläche kann in weiten Bereichen an die Erfordernisse angepaßt werden. Bevorzugt ist die Überlappung so gewählt, daß, in vertikaler Richtung betrachtet, etwa die Hälfte der Barcodefläche von dem Unterrohr abgedeckt wird. Bei der Betrachtung in Richtung normal zur Barcodefläche beträgt der Überlappungsgrad bevorzugt lediglich etwa 20% der Barcodefläche. Hierdurch ist einerseits ein guter Schutz und andererseits eine sichere Erkennbarkeit gewährleistet.

Weitere Einzelheiten, Vorteile und Merkmale ergeben sich aus der nachfolgenden Beschreibung eines Ausführungsbeispiels der Erfindung anhand der Zeichnungen.

Es zeigen:
- Fig. 1: eine schematische Ansicht einer erfindungsgemäßen Transportvorrichtung in einer Ausführungsform in der Draufsicht von oben; und
- Fig. 2: eine Seitenansicht eines Teils einer erfindungsgemäßen Transportvorrichtung, unter schematischer Darstellung auch des Lesegeräts, entsprechend den Pfeilen II-II aus Fig. 1.

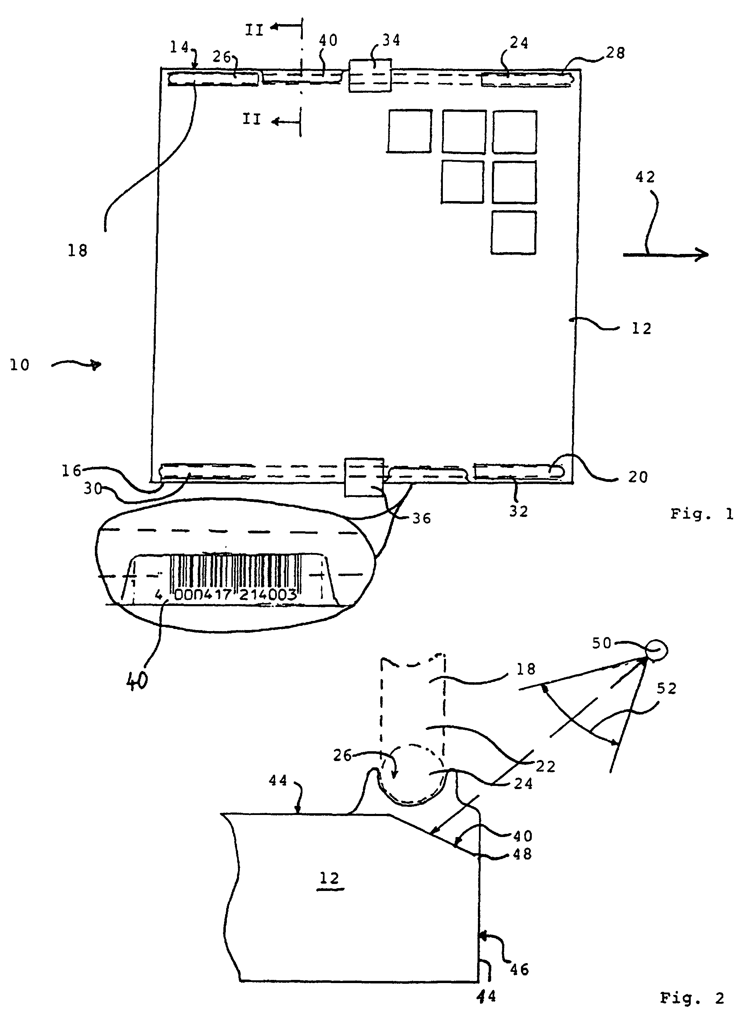

Die in Fig. 1 dargestellte Transportvorrichtung 10 weist eine Bodenplatte 12 und zwei an gegenüberliegenden Seitenkanten 14 und 16 gelagerte Seitenwände 18 und 20 auf, die in an sich bekannter Weise als Gitterroste ausgebildet sind und ein in Fig. 2 schematisch dargestelltes Oberrohr 22 und ein Unterrohr 24 aufweisen.

Die Bodenplatte 12 weist zur Lagerung der Seitenwände 18 und 20 vier Lagernuten 26, 28, 30 und 32 auf, die sich von den vier Ecken der Bodenplatte 12 entlang der Seitenwände 18 und 20 einwärts erstrecken und in ihrer Form an den Durchmesser des Unterrohrs 24 angepaßt sind.

Das Oberrohr ist darüber hinaus in bekannter Weise nach unten über das Unterrohr 24 hinausgehend verlängert und in entsprechenden Ausnehmungen in den Ecken der Bodenplatte 12 eingesteckt.

Die Lagerung der Seitenwände 18 und 20 auf der Bodenplatte 12 umfaßt ferner zwei Halteklammern 34 und 36, die die Seitenkanten 14 und 16 der Bodenplatte 12 und das Unterrohr 24 der jeweiligen Seitenwände 18 und 20 übergreifen und die Seitenwand 18 bzw. 20 auszugssicher auf der Bodenplatte festhalten.

Jede Lagernut erstreckt sich über etwa ein Viertel der Länge einer Seitenkante 14 bzw. 16. Erfindungsgemäß ist zwischen der Halteklammer 34 bzw. 36 und einer benachbarten Lagernut 26, 28, 30 und/oder 32 eine Barcodefläche 40 ausgebildet, die in die Bodenplatte 12 eingeschnitten ist. Unterhalb von Fig. 4 ist zudem eine Detailvergrößerung der Barcodefläche dargestellt.

Bei Ausbildung der Bodenplatte 12 als Kunststoff-Spritzteil läßt sich die Barcodefläche 40 auch besonders günstig durch Einlegen eines entsprechenden Einlagekeils in das im übrigen unveränderte Werkzeug erzeugen. Erfindungsgemäß erstreckt sich die Barcodefläche schräg nach oben/außen, bezogen auf die Bodenplatte 12, und ist so angeordnet, daß sie mindestens teilweise unterhalb des Unterrohres 24 zu liegen kommt.

Es versteht sich, daß es grundsätzlich auch möglich wäre, eine Barcodefläche schräg an den nicht von den Seitenwänden 18 bzw. 20 überlappten Seitenkanten der Bodenplatte 12 anzubringen. Die Laufrichtung der Transportvorrichtung 10 ist jedoch in der Regel entsprechend den in der Zeichung nicht dargestellten Bockrollen in Richtung des Pfeils 42 vorgesehen, so daß für die Erkennbarkeit eine Anordnung unterhalb der Seitenwände 18 und 20 bevorzugt ist. Zudem würde die Barcodefläche an den beiden anderen Seitenwänden ungeschützt und durch herabfallende Waren und dergleichen Beschädigungen ausgesetzt sein, während die bevorzugt angeordnete Barcodefläche praktisch durch die jeweiligen Seitenwände vor den Nutzwaren geschützt ist.

Die Barcodefläche 40 erstreckt sich im wesentlichen über die gesamte freie Länge zwischen der Halteklammer 34 und dem Ende der Lagernut 26. Damit läßt sich ein großflächiges Barcodeetikett in einer Länge von beispielsweise 150 oder 160 cm dort aufbringen, wobei das Etikett eine Höhe von 2 oder sogar 3 cm haben kann. Derart großflächige Etiketten können auch über größere Entfernungen erkannt und sicher gelesen werden; die je zugehörigen Zahlen können zudem von der Bedienperson regelmäßig gelesen werden, auch wenn sie aufrecht steht.

Auch wenn erfindungsgemäß die hier vorgesehenen Schrägflächen als Barcodeflächen bevorzugt eingesetzt werden können, versteht es sich, daß bei Bedarf auch andere Arten von Etiketten dort angebracht werden können, die der Kennzeichnung entweder der Rollbox oder der Nutzwaren dienen können.

Wie aus Fig. 2 ersichtlich ist, erstreckt sich die Barcodefläche 40 von einer Oberseite 44 des Bodens bis zu der Seitenkante 14 der Bodenplatte 12. Die Seitenkante 14 steht unter Bildung einer Stoßkante 46 gegenüber der Seitenwand 18 vor, wobei das Vorsprungmaß zugleich für die Unterbringung der erfindungsgemäßen Barcodefläche 40 ausgenutzt wird. Die Barcodefläche 40 liegt in vertikaler Richtung betrachtet etwa zur Hälfte unter dem Unterrohr, läßt sich aber dennoch bei schräger seitlicher Sicht gut lesen. Nachdem nach Euro-Norm die zugehörigen Ziffern an der Unterkante des Barcodes vorgesehen sind, sind diese der Stoßkante 46 unmittelbar benachbart und damit auch bei senkrechter Sicht noch lesbar.

Zur Erleichterung der Aufbringung der Etiketten ist an der der Stoßkante 46 benachbarten Seite der Barcodefläche ein Stütznocken 48 vorgesehen.

Wie aus Fig. 2 schematisch ersichtlich ist, kann ein Lesegerät 50 eingesetzt werden, dessen Lesewinkel 52 beispielsweise 45° betragen kann. Bei einer geschützten Anbringung in einer Höhe von beispielsweise 1 Meter kann dann das erfindungsgemäße Barcodeetikett relativ entfernungsunabhängig sicher erkannt werden.

Es versteht sich, daß Änderungen der Ausgestaltung möglich sind, ohne den Bereich der Erfindung zu verlassen. Beispielsweise kann die Barcodefläche auch bei Rollboxen eingesetzt werden, deren Bodenplatte aus Holz besteht. Dort kann dann entweder ein entsprechend geformter Metallbeschlag eingesetzt werden, oder kurzerhand eine Pergamin- oder Kunststoffschicht aufgeklebt sein, die die lösbare Befestigung von Barcodeetiketten ermöglicht.

Bei einer Rollbox, deren Bodenplatte aus Metall besteht, kann in den Seitenträger eine schräge Einbuchtung durch eine entsprechende Abkantung eingebracht werden, wenn der Seitenträger aus einem T-Profil besteht. Sogar, wenn ein Vierkantrohr für den Seitenträger eingesetzt wird, läßt sich durch eine entsprechend leicht erhöhte Abstützung der Seitenwände und eine auf dem Vierkantrohr angeschweißte Schrägplatte eine erfindungsgemäße Barcodefläche realisieren.

## Patentansprüche

1. Transportvorrichtung (10), mit einer Bodenplatte (12), die für die Abstützung von Seitenwänden an gegenüberliegenden Seitenkanten (14) bestimmt ist und die vier Laufrollen lagert, und mit einem Anzeigefeld, **dadurch gekennzeichnet, daß** das Anzeigefeld an der Bodenplatte (12) angebracht ist und eine schräg nach oben weisende Barcodefläche (40) aufweist, die insbesondere teilweise unterhalb einer Seitenwand (18,20) angeordnet ist.

2. Transportvorrichtung nach Anspruch 1, **dadurch gekennzeichnet, daß** die Barcodefläche (40)in die Bodenplatte (12) an einer oberen Kante eingeformt ist.

3. Transportvorrichtung nach einem der vorhergehenden Ansprüche, **dadurch gekennzeichnet, daß** die Barcodefläche (40) derart unterhalb einer Seitenwand (18,20) angeordnet ist, daß sie in Richtung ihrer Normalen betrachtet von der Seitenwand (18,20) im wesentlichen nicht überlappt ist, in vertikaler Projektion von der Seitenwand (18,20) jedoch teilweise überdeckt wird.

4. Transportvorrichtung nach einem der vorhergehenden Ansprüche, **dadurch gekennzeichnet, daß** die Seitenwand (18,20) als Gitterrohrgestell ausgebildet ist, und ein rundes Unterrohr (24) an den oberen/inneren Rand der Barcodefläche (40) angrenzt.

5. Transportvorrichtung nach einem der vorhergehenden Ansprüche, **dadurch gekennzeichnet, daß** die Transportvorrichtung (10) zwei Seitenwände (18,20) aufweist und unterhalb jeder Seitenwand (18,20) eine Barcodefläche (40) in der Bodenplatte (12) ausgebildet ist.

6. Transportvorrichtung nach einem der vorhergehenden Ansprüche, **dadurch gekennzeichnet, daß** die Bodenplatte (12) aus Kunststoff ausgebildet ist und Lagernuten (26, 28, 30, 32) für die Seitenwände (18,20) ausbildet, die für die Aufnahme von Unterrohren (24) der Seitenwände (18,20) bestimmt sind, wobei eine Halteklammer (34, 36) das Unterrohr (24) und die Bodenplatte (12) seitlich umgreift und die Barcodefläche (40) zwischen der Halteklammer (34, 36) und einer Lagernut (26, 28, 30, 32) angeordnet ist.

7. Transportvorrichtung nach einem der vorhergehenden Ansprüche, **dadurch gekennzeichnet, daß** die Bodenplatte (12) eine gegenüber der Seitenwand (18, 20) seitlich vorspringende Stoßkante (46) aufweist, bis zu der hin sich die Barcodefläche (40) erstreckt.

8. Transportvorrichtung nach einem der vorhergehenden Ansprüche, **dadurch gekennzeichnet, daß** die Barcodefläche (40) für das ablösbare Aufkleben von Barcodeetiketten ausgebildet und insbesondere wasserabweisend und hochglatt ist.

9. Transportvorrichtung nach Anspruch 8, **dadurch gekennzeichnet, daß** die Barcodefläche (40) aus Kunststoff wie Polyethylen oder Polyvinylchlorid besteht oder mit Pergamin beschichtet ist.

10. Transportvorrichtung nach einem der Ansprüche 1 bis 7, **dadurch gekennzeichnet, daß** die Barcodefläche (40) rauh ausgebildet ist und die Kleb-Haltekraft der Barcodeetiketten auf der Barcodefläche (40) größer als ihre Reißfestigkeit ist.

11. Transportvorrichtung nach einem der vorhergehenden Ansprüche, **dadurch gekennzeichnet, daß** das Anzeigefeld an seinem unteren/äußeren Ende einen Stütznocken (48) aufweist und daß sich das Anzeigefeld an einem innere/oberen Ende bis zu einer Oberseite (44) der Bodenplatte (12) erstreckt.

12. Transportvorrichtung nach einem der vorhergehenden Ansprüche, **dadurch gekennzeichnet, daß** sich die Barcodefläche (40) in einem Winkel von bis zu 50, bevorzugt etwa 20° zur Waagerechten erstreckt.

## Claims

1. A conveying apparatus (10) with a base plate (12) which is intended for the support of side walls on opposing side edges (14) and on which four rollers are mounted, and with a display panel, **characterised in that** the display panel is applied to the base plate (12) and has an upwardly facing barcode area (40) which is arranged in particular partly below a side wall (18,20).

2. A conveying apparatus according to Claim 1, **characterised in that** the barcode area (40) is moulded into the base plate (12) at one upper edge.

3. A conveying apparatus according to any one of the preceding Claims, **characterised in that** the barcode area (40) is so arranged below a side wall (18,20) that, viewed from a direction normal to the side wall, it is not substantially overlapped by the side wall (18,20) but is partly overlapped in the vertical projection of the side wall (18,20).

4. A conveying apparatus according to any one of the preceding Claims, **characterised in that** the side wall (18,20) is in the form of a lattice frame and a round bottom tube (24) adjoins the upper/inner edge of the barcode area (40).

5. A conveying apparatus according to any one of the preceding Claims, **characterised in that** the conveying apparatus (10) has two side walls (18,20) and below each side wall (18,20) a barcode area (40) is formed in the base plate (12).

6. A conveying apparatus according to any one of the preceding Claims, **characterised in that** the base plate (12) is formed from plastics material and mounting grooves (26,28,30,32) for the side walls (18,20) are formed which are intended to receive bottom tubes (24) of the side walls (18,20), wherein a retaining clip (34,36) laterally embraces the bottom tube (24) and the base plate (12) and the barcode area (40) is disposed between the retaining clip (34,36) and a mounting groove (26,28,30,32).

7. A conveying apparatus according to any one of the preceding Claims, **characterised in that** the base plate (12) has an abutting edge (46) which projects laterally with respect to the side wall (18,20) and up to which the barcode area (40) extends.

8. A conveying apparatus according to any one of the preceding Claims, **characterised in that** the barcode area (40) is designed for the detachable adhesion of barcode labels and, in particular, is water-repellent and is very smooth.

9. A conveying apparatus according to Claim 8, **characterised in that** the barcode area (40) consists of plastics material, such as polyethylene or polyvinyl chloride, or is coated with "pergamyn paper".

10. A conveying apparatus according to any one of Claims 1 to 7, **characterised in that** the barcode area (40) is rough and the adhesive resistance of barcode labels on the barcode area (40) is greater than its tearing resistance.

11. A conveying apparatus according to any one of the preceding Claims, **characterised in that** on its lower/outer end the display panel has a supporting cam (48), and **in that** the display panel extends on an inner/upper end up to an upper side (44) of the base plate (12).

12. A conveying apparatus according to any one of the preceding Claims, **characterised in that** the barcode area (40) extends at an angle of up to 50°, preferably approximately 20°, relative to the horizontal.

## Revendications

1. Dispositif de transport (10) avec une plaque de fond (12) conçue pour soutenir des parois latérales sur des bords latéraux (13) opposés et servant au montage tourillonnant de quatre galets de roulement, et avec un champ d'affichage, **caractérisé en ce que** le champ d'affichage est appliqué sur la plaque de fond (12) et présente une surface de code-barres (40) tournée obliquement vers le haut, disposée en particulier partiellement au-dessous d'une paroi latérale (18, 20).

2. Dispositif de transport selon la revendication 1, **caractérisé en ce que** la surface de code-barres (40) est creusée dans la plaque de fond (12), sur un bord supérieur.

3. Dispositif de transport selon l'une des revendications précédentes, **caractérisé en ce que** la surface de code-barres (40) est disposée au-dessous d'une paroi latérale (18, 20), de manière que, étant observée dans la direction de sa normale, elle ne soit pratiquement pas recouverte par la paroi latérale (18, 20), en étant cependant partiellement recouverte par la paroi latérale (18, 20), si l'on observe en projection verticale.

4. Dispositif de transport selon l'une des revendications précédentes, **caractérisé en ce que** la paroi latérale (18, 20) est réalisée sous la forme de bâti tubulaire en grille, et un tube inférieur (24) rond se raccorde au bord supérieur/intérieur de la surface à code-barres (40).

5. Dispositif de transport selon l'une des revendications précédentes, **caractérisé en ce que** le dispositif de transport (10) présente deux parois latérales (18, 20) et, au-dessous de chaque paroi latérale (18, 20), une surface à code-barres (40) est réalisée dans la plaque de fond (12).

6. Dispositif de transport selon l'une des revendications précédentes, **caractérisé en ce que** la plaque de fond (12) est réalisée en matière synthétique et forme des rainures de montage (26, 28, 30, 32) pour les parois latérales (18, 20), conçues pour loger des tubes inférieurs (24) des parois latérales (18, 20), une pince de maintien (34, 36) saisissant par le côté le tube inférieur (24) et la plaque de fond (12), et la surface de code-barres (40) étant disposée entre la pince de maintien (34, 36) et une rainure de montage (26, 28, 30, 32).

7. Dispositif de transport selon l'une des revendications précédentes, **caractérisé en ce que** la plaque de fond (12) présente un plat-bord (46), faisant saillie latéralement par rapport à la paroi latérale (18, 20), jusqu'auquel la surface de code-barres (40) s'étend.

8. Dispositif de transport selon l'une des revendications précédentes, **caractérisé en ce que** la surface de code-barres (40) est réalisée pour effectuer un collage, désolidarisable, d'étiquettes à code-barres et, en particulier, est hydrophobe et très lisse.

9. Dispositif de transport selon l'une des revendications précédentes, **caractérisé en ce que** la surface de code-barres (40) est formée de matière synthétique, telle que du polyéthylène, ou du polychlorure de vinyle, ou bien enduite de pergamine.

10. Dispositif de transport selon l'une des revendications 1 à 7, **caractérisé en ce que** la surface à code-barres (40) est rugueuse et la force de maintien par adhésion des étiquettes à code-barres sur la surface à code-barres (40) est supérieure à sa résistance au déchirement.

11. Dispositif de transport selon l'une des revendications précédentes, **caractérisé en ce que** le champ d'affichage présente, sur son extrémité inférieure/extérieure, un ergot d'appui (48), et **en ce que** le champ d'affichage s'étend sur une extrémité intérieure/supérieure, jusqu'à une face supérieure (44) de la plaque de fond (12).

12. Dispositif de transport selon l'une des revendications précédentes, **caractérisé en ce que** la surface à code-barres (40) s'étend sous un angle allant jusqu'à 50°, de préférence environ 20°, par rapport à l'horizontale.
